Europäisches Patentamt

European Patent Office

Office européen des brevets

(19)

(11) Veröffentlichungsnummer: **0 035 467**
A1

(12) # EUROPÄISCHE PATENTANMELDUNG

(21) Anmeldenummer: 81810039.8

(22) Anmeldetag: 11.02.81

(51) Int. Cl.³: **B 29 D 27/00**, B 29 F 3/04

(30) Priorität: 04.03.80 CH 1697/80

(43) Veröffentlichungstag der Anmeldung: 09.09.81
Patentblatt 81/36

(84) Benannte Vertragsstaaten: **AT BE CH DE FR GB IT LI LU NL SE**

(71) Anmelder: **SCHWEIZERISCHE ALUMINIUM AG, CH-3965 Chippis (CH)**

(72) Erfinder: **Walter, Juris, Heerenweg 5, CH-8200 Schaffhausen (CH)**

(54) **Verfahren zur Herstellung von geschäumten Kunststoffplatten.**

(57) Die Erfindung betrifft ein Verfahren zur kontinuierlichen Herstellung geschäumter Platten aus thermoplastischem Kunststoff mit extremem Breiten-Dicken-Verhältnis bei geringer Dickentoleranz, wobei die Platten über den gesamten Querschnitt eine gleichmässige Zellenstruktur und beidseits eine dünne, ungeschäumte Aussenhaut aufweisen. Der mit Treibmittel versehene, die Breitschlitzdüse (20) verlassende Kunststoff schäumt ohne Begrenzungsmassnahmen frei auf und erkaltet. Die derart gebildete Platte wird lokal oberflächlich erwärmt (30) und kalibriert (40).

EP 0 035 467 A1

## Verfahren zur Herstellung von geschäumten Kunststoffplatten

Die Erfindung bezieht sich auf ein Verfahren zur kontinuierlichen Herstellung geschäumter Platten aus thermoplastischem Kunststoff, insbesondere aus Polyvinylchlorid, mit extremem Breiten-Dickenverhältnis und geringer Dickentoleranz.

Bei der kontinuierlichen Herstellung von geschäumten Kunststoffplatten unterscheidet man grundsätzlich zwischen dem Verfahren "Schäumung gegen aussen" und "Schäumung gegen innen".

Der Verfahren "Schäumung gegen aussen" stellt das ältere und einfachere Verfahren dar. Danach wird der bereits mit dem Treibmittel versetzte thermoplastische Kunststoff durch Breitschlitzdüsen extrudiert. Das heisse, weiche und noch schäumende Extrudat wird einer direkt anschliessenden Kalibriereinrichtung zugeführt, wo der Expansionsprozess des Schaumes durch Kontakt mit den gekühlten Flächen zum Stillstand kommt.

Das Verfahren "Schäumung gegen innen" wird z.B. durch den in der Patentschrift DE-OS 17 29 076 beschriebenen Celuka-Prozess repräsentiert. Danach wird in das Extrusionswerkzeug ein besonders ausgebildeter Metallkern, ein sogenannter Torpedo eingesetzt, der im Extrudat einen Hohlraum erzeugt. Das Extrudat wird in einer nahe anschliessenden Kalibriervorrichtung an den äusseren Oberflächen gekühlt. Dadurch wird die Aussenhaut des Extrudats am Aufschäumen gehindert, so dass zunächst ein Hohlprofil entsteht. Die noch heisse, niedrig viskose innere Zone schäumt zur Mitte hin so lange bis der Hohlraum ausgefüllt ist und sich ein Gegendruck aufgebaut hat.

0035467

Mit beiden vorbeschriebenen Verfahren können dünne Platten nur mit einer relativ geringen Breite hergestellt werden, was allgemein als wesentliche Einschränkung in der Verwendung der Platten angesehen wird.

Beim Verfahren "Schäumung gegen aussen" bildet sich je nach Kühlintensität und Anpressdruck an den Kühlflächen eine mehr oder weniger dicke Aussenhaut. Eine bestimmte Hautdicke kann dabei aber nicht unterschritten werden, weil einerseits durch die Abkühlung an den Wänden der Druck in den Zellen abfällt und die Zellen bei zu geringem Innendruck kollabieren und dadurch die Güte der Oberfläche beeinflussen und zum anderen, insbesondere bei Anwendung der Vakuumkalibrierung, die Haut gleichzeitig eine Stützfunktion ausüben muss, um zu verhindern, dass Gefüge- und Formänderungen durch die Reibungskräfte während des Ziehens durch die Kalibrieranlage auftreten.

Zwar benötigt dieses Verfahren nicht so aufwendige Werkzeuge wie das Verfahren "Schäumung gegen innen" und lässt zudem eine höhere Produktionsgeschwindigkeit zu, doch mangelt es dem geschäumten Produkt an Qualität. Abgesehen von der nicht immer glatten Oberfläche variiert die Dicke der Platte stark.

Obwohl beim Verfahren "Schäumung gegen innen" durch gezielte Wahl der Einflussgrössen wie Torpedoform und Torpedogrösse, Kühl- und Abzugsgeschwindigkeit, Rezeptur etc. die Dichte des geschäumten Materials variiert werden kann, lässt es sich nicht umgehen, dass die Aussenhaut, bestehend aus ungeschäumtem Material, relativ dick ausfällt und die geschäumte Kernschicht von Poren stark unterschiedlicher Grösse gebildet wird, wobei die Porendurchmesser verständlicherweise über den Querschnitt gesehen zur Kernschichtmitte hin zunehmen. Häufig zeigen sich Gefügeinhomogenitäten, insbesondere im Querschnitt auf der Mittellinie der Kernschicht, wo sich die von aussen her schäumenden Bereiche treffen. Man beobachtet dort nicht selten eine flächenhafte, lineare Textur oder gar Abplattungen. Die dadurch bedingte Schwächung des Kerns kann für Anwendungszwecke, bei denen die Platten stark mechanisch beansprucht werden und es besonders auf die Steifigkeit ankommt von Nachteil sein, obwohl die Steifigkeit derartiger Platten im wesentlichen auf die nichtschäumende Aussenhaut zurückzuführen ist. Bei Verwendung, wo es nur untergeordnet auf mechanische Festigkeit ankommt, z.B. im Wärmeisolationsbereich, ist dagegen die nach dem Verfahren "Schäumung gegen innen" hergestellte Platte aus wirtschaftlicher Sicht nicht günstig, denn die relativ dicke ungeschäumte Aussenhaut enthält einen wesentlichen Anteil des eingesetzten Kunststoffmaterials, dessen Einsatz somit nicht optimal genutzt wird. Ein weiterer, sehr wesentlicher Nachteil dieses Verfahrens besteht jedoch darin, dass es für die Herstellung von breiten und dünnen Platten - etwa Platten über 1000 mm Breite bei einer Dicke von unter 10 mm - nicht oder nur unter grossem Aufwand geeignet ist. Denn zwei Gründe sprechen dagegen: Erstens ist es nicht möglich, zur Bildung des Hohlraums im Extrusionswerkzeug mit einem Torpedo, das sehr kleine Höhen-Breitenverhältnisse aufweist, zu fertigen und zweitens kann die Aussenhaut durch die für die Bildung des Hohlprofils notwendige intensive Kühlung bei der Kalibrierung nicht eine bestimmte Dicke unterschreiten. So sind nach dem derzeitigen Stand der Technik nach diesem Verfahren geschäumte Kunststoffplatten von unter 10 mm Dicke bei Breiten von 1000 mm und mehr nicht machbar. Auch wenn es möglich ist, Extrusionswerkzeuge für die Herstellung von Platten unter 10 mm Dicke und über 1000 mm Breite bereitzustellen, so sind die Herstellungskosten derartig hoch, dass der wirtschaftliche Nutzen der damit hergestellten Platten in Frage gestellt ist.

In Kenntniss der Nachteile der oben beschriebenen Verfahren zur Herstellung von geschäumten Kunststoffplatten stellt sich die Aufgabe, ein Verfahren zur Herstellung von breiten und dünnen geschäumten Kunststoffplatten, insbesondere aus Polyvinylchlorid mit homogener Zellenstruktur und glatter, dichter Oberfläche herzustellen, insbesondere solche, die bei geringer Hautdicke gleichzeitig auch geringe Dickenabweichungen aufweisen.

Die gestellte Aufgabe wird dadurch gelöst, dass der bereits mit einem Treibmittel versehene Kunststoff den Extruder durch die Breitschlitzdüse verlässt und aufschäumt, wobei die Schäumung der plastischen Masse bis zu ihrem Beenden nicht behindert wird, d.h. jegliche Begrenzung des Schäumungsbereichs wird unterlassen. In einem Kühlprozess wird sodann die geschäumte Platte über den gesamten Querschnitt gleichmässig abgekühlt. Die feste, ausgekühlte Platte wird anschliessend lokal durch eine Heizvorrichtung so erwärmt, dass eine dünne, der Oberfläche nahe liegende Schicht wieder in den plastischen, verformbaren Zustand übergeht, und durch eine Kalibriereinrichtung geführt. Dabei bildet der geschäumte Kunststoff vom Austritt aus dem Extrusionswerkzeug bis zur fertigen Platte nach der Kalibrierung eine einzige Bahn.

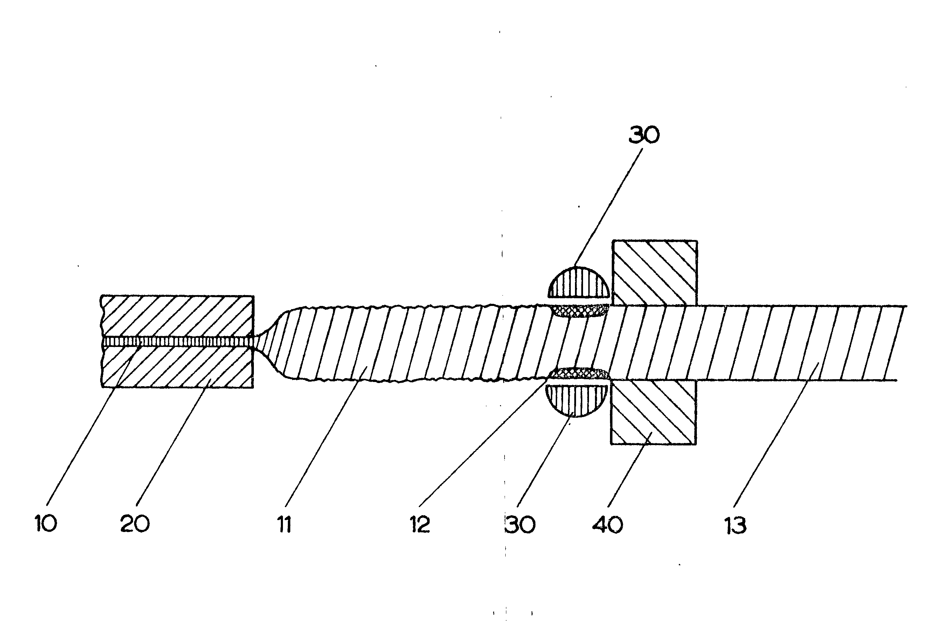

Vorteile, Merkmale und Einzelheiten der Erfindung ergeben sich aus der nachfolgenden Beschreibung sowie anhand der Zeichnung.

Die Zeichnung zeigt das erfindungsgemässe Verfahren schematisch im Schnitt. Nach Austritt aus der Breitschlitzdüse 20 schäumt der bereits Treibmittel enthaltende Kunststoff 10 auf und bildet eine geschäumte Kunststoffplatte 11, die Oberflächenunebenheiten und unterschiedliche Dicke, eventuell sogar Längswellen aufweist. Nach dem Abkühlen der Platte auf mindestens eine solche Temperatur, bei der keine Gefügeänderung des Materials mehr auftritt, wird diese unmittelbar oder kurz vor dem Eintritt in die Kalibriereinrichtung 40 in einer senkrecht zur Laufrichtung angeordneten Heizvorrichtung 30 so erwärmt, dass über die volle Breite ein Bereich 12 der Platte 11 in einen für die Kalibrierung notwendigen viskosen Zustand gebracht wird. Die Erweichungszone liegt nur im Bereich der Oberfläche der Platte 11. Von wesentlicher Bedeutung für die Erfindung ist, dass der grösste Teil der Platte 11 - über dem Querschnitt gesehen mindestens 50 % -, insbesondere der Plattenkern im kalten, festen Zustand bleibt. Als besonders vorteilhaft hat sich erwiesen, wenn nur etwa 10 bis 30 % der Querschnittsfläche in den erweichten, zum Kalibrieren geeigneten Zustand überführt wird. In dem lokal erweichten Zustand wird die Platte der Kalibriervorrichtung 40, vorzugsweise eine Vakuumkalibriervorrichtung, zugeführt und auf das gewünschte Endmass kalibriert.

Die nach diesem Verfahren hergestellte Platte 13 hat nur geringe Dickenabweichungen und eine glatte Oberfläche. Längswellen, die auf der Platte 11 vorhanden waren, sind beim Endprodukt 13 weder von Auge in irgendeiner Weise erkennbar, noch zeigen sich an ihren ursprünglichen Stellen Dickenabweichungen, die sich von denen der übrigen Bereiche abheben. Die Zellenstruktur über den gesamten Querschnitt bis nahe zur sehr dünnen nicht geschäumten Aussenhaut ist gleichmässig. Die Poren sind an jedem Ort nahezu von gleicher Grösse. Textureffekte oder sonstige Inhomogenitäten sind nicht zu beobachten.

Obwohl sich bei der Vorgehensweise nach dem erfindungsgemässen Verfahren herkömmliche Kalibriervorrichtungen durchaus eignen, ist es jedoch nicht mehr zwingend, die Kalibrierstrecke so lang auszuführen wie es bei den bisherigen Verfahren nötig war. Das Kollabieren des geschäumten Materials wird bei dem erfindungsgemässen Ver-

fahren vermieden, da nur die oberste Oberflächenschicht in den plastischen Zustand gebracht wird und die Abführung des Wärmeinhalts der plastischen Masse auf einer wesentlich kürzeren Kühlstrecke möglich ist als bei den bisherigen Verfahren, wo auf der Kalibrierstrecke der über den gesamten Querschnittsbereich verteilte Wärmeinhalt des Extrudats mindestens so weit abgeführt werden muss, dass die geschäumte Masse an keinem Ort kollabiert; das ist nahezu der gesamte Wärmeinhalt und lange Kühlstrecken sowie ein hoher Zeitaufwand sind wegen der schlechten Wärmeleitung des geschäumten Materials, insbesondere für die Kernzone notwendig.

Die Kalibrierung stellt einen langsamen und damit produktionsgeschwindigkeitsbestimmenden Verfahrensschritt bei allen bisher bekannten Verfahren zur Herstellung von masshaltigen, geschäumten Platten oder dergleichen dar. Die Kalibrierung wird nach dem erfindungsgemässen Verfahren jedoch nur auf der Oberflächenschicht der Platte angewendet. Demzufolge kann die Platte viel schneller die Kalibriervorrichtung durchlaufen, was die Produktionskapazität pro Zeiteinheit stark erhöht.

Bei der Ausgestaltung des erfindungsgemässen Verfahrens hat sich gezeigt, dass sich bei Verwendung einfacher Breitschlitzdüsen 20 ohne jegliche Einbauten Platten mit Breiten von grösser/gleich 1000 mm bei Dicken unter 10 mm ohne Schwierigkeiten herstellen lassen. Insbesondere konnten bei einer Plattenbreite von 1220 mm und Dicken zwischen 3 bis 6 mm unter Verwendung von Breitschlitzdüsen 20 mit einer Auslaufzone von 1300 mm Breite bei 0,3 bis 4 mm Höhe besonders hohe Produktionsgeschwindigkeiten erzielt werden. Ohne Aenderung der konstruktiven Massnahmen sind Breitschlitzdüsen 20, die über dieses Mass hinausgehen, bis etwa 2000 mm, vorzugsweise 1300 bis 1700 mm, einsetzbar, wobei die Höhe zwischen 0,3 und 6 mm variieren kann.

0035467

Als Heizvorrichtung 30 eignen sich besonders Heissluft- und/oder Infrarotstrahlaggregate. Besonders beim Anfahren einer nach dem erfindungsgemässen Verfahren arbeitenden Anlage hat sich die Kombination dieser beiden Erwärmungsgeräte bewährt: Durch die Heissluft wird ein Plattenbereich senkrecht zur Laufrichtung nahe der Kalibriereinrichtung vorgewärmt und mit dem unmittelbar vor der Kalibriereinrichtung angeordneten Infrarotstrahlgerät wird dieser vorgewärmte Bereich auf die für die Kalibrierung notwendige Viskosität gebracht.

Der notwendige Grad der Erwärmung der Oberfläche zwecks Herbeiführung der günstigsten Viskosität des plastischen Bereichs ist vom eingesetzten Material und den Maschinen abhängig und muss durch Probeläufe festgelegt werden.

Patentansprüche

1. Verfahren zur kontinuierlichen Herstellung von breiten und dünnen, über den gesamten Querschnitt gleichmässige Zellenstruktur und beidseits eine dünne ungeschäumte Aussenhaut aufweisenden Platten aus thermoplastischem Kunststoff, insbesondere aus Polyvinylchlorid, mit geringen Dickentoleranzen,

dadurch gekennzeichnet,

dass der mit Treibmittel versehene, die Breitschlitzdüse (20) des Extruders verlassende Kunststoff ohne Begrenzungsmassnahmen frei aufschäumt, erkaltet, die derart gebildete Platte (11) durch eine Heizvorrichtung (30) in einem Bereich (12) lokal erwärmt und in den plastischen, kalibrierbaren Zustand überführt wird und die derart gebildete, lokal verformbare Platte kalibriert wird.

2. Verfahren nach Anspruch 1, dadurch gekennzeichnet, dass der Bereich (12) senkrecht zur Laufrichtung der Platte verläuft.

3. Verfahren nach den Ansprüchen 1 und 2, dadurch gekennzeichnet, dass die Erwärmung des Bereichs (12) nahe der Kalibriervorrichtung (40) erfolgt.

4. Verfahren nach den Ansprüchen 1 bis 3, dadurch gekennzeichnet, dass die Erwärmung des Bereichs (12) unmittelbar vor der Kalibriervorrichtung (40) erfolgt.

5. Verfahren nach den Ansprüchen 1 bis 4, dadurch gekennzeichnet, dass als Heizvorrichtung (30) ein Heissluft- und/oder Infrarotstrahlaggregat verwendet wird.

0035467

6. Verfahren nach den Ansprüchen 1 bis 5, dadurch gekennzeichnet, dass als Heizvorrichtung (30) vorzugsweise ein Infrarotstrahlaggregat verwendet wird.

7. Verfahren nach mindestens einem der Ansprüche 1 bis 6, dadurch gekennzeichnet, dass der Bereich (12) höchstens 50 %, vorzugsweise 10 bis 30 % des Querschnitts der Platte ausmacht und der restliche Anteil in dem freien, geschäumten Zustand der Platte (11) belassen wird.

8. Verfahren nach mindestens einem der Ansprüche 1 bis 7, dadurch gekennzeichnet, dass Breitschlitzdüsen (20) verwendet werden, deren Auslaufzonen Breiten zwischen 1000 und 2000 mm, vorzugsweise zwischen 1300 und 1700 mm und deren Höhen zwischen 0,3 und 6 mm, vorzugsweise zwischen 0,3 und 4 mm liegen.

9. Verfahren nach mindestens einem der Ansprüche 1 bis 8, dadurch gekennzeichnet, dass vorzugsweise Breitschlitzdüsen (20) verwendet werden, deren Auslaufzone eine Breite von 1300 mm und Höhen von 0,3 bis 4 mm aufweisen.

30

10  20  11  12  30  40  13

1/1

0035467

Europäisches
Patentamt

**EUROPÄISCHER RECHERCHENBERICHT**

0035467
Nummer der Anmeldung

EP 81 81 0039.8

| EINSCHLÄGIGE DOKUMENTE | | | KLASSIFIKATION DER ANMELDUNG (Int. Cl.³) |
|---|---|---|---|
| **Kategorie** | **Kennzeichnung des Dokuments mit Angabe, soweit erforderlich, der maßgeblichen Teile** | **betrifft Anspruch** | |
| D | DE - A - 1 729 076 (UGINE KUHLMANN) <br> * Anspruch 1 * <br><br> -- | 1 | B 29 D 27/00 <br><br> B 29 F 3/04 |
| | DE - A - 1 504 263 (FARBENFABRIKEN <br> BAYER AG) <br> * Seite 2 * <br><br> -- | 1 | |
| | DE - A - 2 017 843 (MONSANTO CHEMICALS <br> LTD.) <br> * Seite 2, Absatz 1 * <br><br> -- | 1 | **RECHERCHIERTE SACHGEBIETE (Int. Cl.³)** |
| A | KUNSTSTOFFE, Band 67, Nr. 3, 1977 <br> H. BARTH et al. "Extrusionswerkzeuge <br> für PVC-Hartschaum-Profile" <br> Seiten 130 bis 135 <br><br> -- | | B 29 D 27/00 <br><br> B 29 F 3/04 |
| A | DE - A - 2 050 550 (UGINE KUHLMANN) <br> * Anspruch 1 * <br><br> -- | | |
| A | DE - B - 1 225 847 (MONSANTO CO.) <br> * Anspruch 1 * <br><br> -- | | **KATEGORIE DER GENANNTEN DOKUMENTE** |
| A | DE - B - 1 779 374 (REIFENHÄUSER KG) <br> * Anspruch 1 * <br><br> ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

| X | Der vorliegende Recherchenbericht wurde für alle Patentansprüche erstellt. | | |
|---|---|---|---|
| **Recherchenort** <br> Berlin | **Abschlußdatum der Recherche** <br> 27-05-1981 | **Prüfer** <br> BITTNER | |

EPA form 1503 1   06.78